# EUROPÄISCHE PATENTSCHRIFT

(11) **EP 1 191 826 B1**
(45) Veröffentlichungstag und Bekanntmachung des Hinweises auf die Patenterteilung: **27.12.2006**
(21) Anmeldenummer: 01122012.6
(22) Anmeldetag: 13.09.2001
(51) Int. Cl.: H05B 41/36

(54) **Elektronisches Vorschaltgerät mit digitaler Steuereinheit**
Electronic ballast with a digital control unit
Ballast électronique avec une unité de commande numérique

(30) Priorität: 15.09.2000 DE 10045713; 13.06.2001 DE 10128586
(43) Veröffentlichungstag der Anmeldung: 27.03.2002
(73) Patentinhaber: TridonicAtco GmbH & Co. KG, 6851 Dornbirn (AT)
(72) Erfinder: Zudrell-Koch, Stefan, Dipl.-Ing. (FH), 6850 Dornbirn (AT)
(74) Vertreter: Rupp, Christian

(56) Entgegenhaltungen:
- EP-A- 0 830 982
- WO-A-00/07415
- WO-A-99/34650
- US-A- 5 680 015
- US-A- 5 705 897
- BUSO, MATTAVELLI, ROSSETTO, SPIAZZI: "Simple Digital Control Improving Dynamic Performance of Power Factor Preregulators" IEEE TRANSACTIONS ON POWER ELECTRONICS, Bd. 13, Nr. 5, September 1998 (1998-09), Seiten 814-823, XP011043208

## Beschreibung

Die vorliegende Erfindung betrifft ein elektronisches Vorschaltgerät zum Betreiben einer Gasentladungslampe nach dem Oberbegriff des Anspruches 1.

Der Einsatz elektronischer Vorschaltgeräte zum Betreiben von Gasentladungslampen führt wegen niedrigeren Vorschaltgeräteverlusten sowie einem verbesserten Lampenwirkungsgrad zu deutlichen Energieeinsparungen. Den Eingang eines elektronischen Vorschaltgeräts bildet üblicherweise ein an das Spannungsversorgungsnetz angeschlossenes Hochfrequenzfilter, welches mit einer Gleichrichterschaltung verbunden ist. Die von der Gleichrichterschaltung gleichgerichtete Versorgungsspannung wird nachfolgend einer Glättungsschaltung zum Erzeugen einer Zwischenkreisspannung zugeführt, ein mit der Zwischenkreisspannung gespeister Wechselrichter erzeugt schließlich eine hochfrequente Wechselspannung, welche an den Lastkreis mit der darin angeordneten Gasentladungslampe angelegt wird. Das Betreiben der Lampe mit der hochfrequenten Wechselspannung hat eine Verringerung der Elektrodenverluste sowie eine Steigerung der Lichtausbeute in der positiven Säule der Lampe zur Folge.

Ein elektronisches Vorschaltgerät der oben beschriebenen Art ist beispielsweise aus der WO 99/34647 A1 bekannt, wobei ein sicherer und zuverlässiger Betrieb durch zwei voneinander getrennte Regelkreise gewährleistet wird. Der erste Regelkreis betrifft die Glättungsschaltung und hat die Aufgabe, die von der Glättungsschaltung erzeugte Zwischenkreisspannung zu stabilisieren. Dies ist erforderlich, da die Ausgangsleistung des Vorschaltgerätes veränderlich ist und die Glättungsschaltung die hierzu erforderliche Leistung bereitstellen muß, wobei sich eine Änderung der Ausgangsleistung automatisch auf die Zwischenkreisspannung auswirkt. Darüber hinaus wird durch ein geeignetes Betreiben der Glättungsschaltung das Rückstrahlen von Oberwellen ins Netz reduziert.

Der zweite Regelkreis betrifft den Wechselrichter zum Betreiben der Gasentladungslampe, wobei die Regelung derart erfolgt, daß die Lampe mit einer gewünschten Leistung oder Helligkeit betrieben wird. Die Steuerschaltung hierfür wird durch eine anwendungsspezifische integrierte Schaltung (Application Specific Integrated Circuit - ASIC) gebildet, der mehrere Betriebsparameter in Form von analogen Eingangssignalen zugeführt werden. Intern werden diese Eingangssignale mit Hilfe von Komparatoren mit Referenzwerten verglichen und in "quasi-digitale" Signale umgewandelt, d.h., ein Komparator entscheidet, ob das Eingangssignal oberhalb oder unterhalb des Referenzwertes liegt. Anhand dieser Information erfolgt dann die Ansteuerung des Wechselrichters.

Aus der EP 0 830 982 A2 ist ferner ein elektronisches Vorschaltgerät bekannt, bei dem ein als anwendungsspezifische integrierte Schaltung (ASIC) ausgebildeter digitaler Schaltregler die Glättungsschaltung in Abhängigkeit von dem digitalen Wert der erfaßten Zwischenkreisspannung ansteuert, wobei die Verarbeitung der erfaßten Zwischenkreisspannung mit Hilfe eines Mikrocomputers, also auf Software-Basis stattfindet. Die Schaltung erfaßt darüber hinaus auch Eingangswerte des Wechselrichters und steuert auf Basis dieser Werte den Wechselrichter an.

Der vorliegenden Erfindung liegt die Aufgabe zugrunde, ein Vorschaltgerät der eingangs beschriebenen Art derart weiterzuentwickeln, daß dieses kostengünstig und in seinen Abmessungen äußerst kompakt hergestellt werden kann. Gleichzeitig soll eine die Regelung der Zwischenkreisspannung optimiert werden, um das Auftreten von Oberwellen zu vermeiden.

Die Aufgabe wird durch ein elektronisches Vorschaltgerät, welches die Merkmale des Anspruches 1 aufweist, gelöst. Weiterbildungen der Erfindung sind Gegenstand der Unteransprüche.

Das erfindungsgemäße Vorschaltgerät enthält zunächst eine an eine Wechselspannungsquelle anschließbare Gleichrichterschaltung, eine an den Ausgang der Gleichrichterschaltung angeschlossene Glättungsschaltung zum Erzeugen einer Zwischenkreisspannung und einen mit der Zwischenkreisspannung gespeisten Wechselrichter, an dessen Ausgang ein Anschlüsse für die Lampe enthaltender Lastkreis angeschlossen ist. Die Glättungsschaltung wird durch einen Schaltregler gebildet, wobei eine Steuerschaltung vorgesehen ist, welche mindestens einen Betriebsparameter der Glättungsschaltung erfaßt und einen steuerbaren Schalter des Schaltreglers in Abhängigkeit von dem erfaßten Betriebsparameter ansteuert.

Die Steuerschaltung weist einen Analog/Digital-Wandler auf, der den erfaßten Betriebsparameter der Glättungsschaltung in einen aus mindestens 2 bit bestehenden Digitalwert umsetzt. Auf Basis dieses Digitalwerts berechnet die Steuerschaltung innerhalb eines digitalen Regelkreises anschließend eine Schaltinformation zum Betreiben des Schalters und übermittelt diese an eine Treiberschaltung, welche die Schaltinformation in ein entsprechendes Steuersignal zum Ansteuern des Schalters umsetzt. Erfindungsgemäß ist hierbei die Glättungsschaltung durch einen Hochsetzsteller gebildet, wobei die Steuerschaltung den durch eine Induktivität des Hochsetzstellers fließenden Strom bzw. einen diesem Strom entsprechenden Parameter erfaßt.

Vorzugsweise erfaßt die Steuerschaltung ferner auch mindestens einen Betriebsparameter des Lastkreises und weist einen weiteren Analog/Digital-Wandler zum Umsetzen dieses Betriebsparameters in einen Digitalwert auf, wobei sie auf Basis dieses Digitalwerts in einem weiteren digitalen Regelkreis eine Schaltinformation zum Betreiben des Wechselrichters berechnet und an die Treiberschaltung übermittelt, welche diese Schaltinformation in ein entsprechendes Steuersignal zum Ansteuern des Wechselrichters umsetzt.

Die erfindungsgemäße Lösung besteht somit darin, als Istwert für die Regelung der Zwischenkreisspannung den durch eine Induktivität des Hochsetzstellers fließenden Strom bzw. einen diesem Strom entsprechender Parameter zu verwenden. Hierbei handelt es sich um einen sich sehr schnell ändernden Parameter, der eine sehr genau Regelung der Ziwschenkreisspannung unter der Vermeidung von Oberwellen gestattet.

Gemäß der Weiterbildung der Erfindung wird dann sowohl die Regelung der Zwischenkreisspannung als auch die Regelung des Wechselrichters digital realisiert. Durch diese digitale Regelung kann zum einen eine sehr hohe Stabilität des Betriebsverhaltens erzielt werden, zum anderen nimmt eine digitale Schaltung nur wenig Platz in Anspruch, so daß das Vorschaltgerät insgesamt kleiner gestaltet werden kann. Wesentlich hierbei ist auch, daß die Steuerschaltung zur Regelung des Wechselrichters Betriebsparameter - beispielsweise die Lampenspannung und/oder den Lampenstrom - unmittelbar aus dem Lastkreis entnimmt. Da diese Eingangswerte eine zuverlässige Beurteilung des aktuellen Zustands des Lastkreises bzw. der Lampe erlauben, kann - im Vergleich zum Stand der Technik - eine hohe Genauigkeit und Zuverlässigkeit bei der Ansteuerung der Lampe erzielt werden.

Zur Regelung der Zwischenkreisspannung können ergänzend auch die Zwischenkreisspannung und/oder die Eingangsspannung der Glättungsschaltung genutzt werden.

Vorzugsweise weist die Steuerschaltung lediglich einen einzigen Analog/Digital-Wandler auf, der zum Umsetzen der für die verschiedenen Regelvorgänge erfaßten Betriebsparameter in digitale Werte im Zeitmultiplex arbeitet.

Um die Regeleigenschaften der Steuerschaltung auf die verschiedenen Betriebszustände der Lampe abstimmen zu können, weist die Steuereinheit vorzugsweise einen Betriebszustands-Steuerblock auf, der eine Betriebszustands-Information erzeugt und an den oder die digitalen Regelkreise zum Betreiben des Schaltreglers bzw. des Wechselrichters übermittelt, wobei diese Betriebszustands-Informationen die Berechnung der Schaltinformationen in den Regelkreisen beeinflussen. Dadurch wird ermöglicht, daß während einer Vorheizphase, einer Zündphase oder eines Normalbetriebs der Gasentladungslampe verschiedene und auf die jeweilige Betriebsphase optimierte Regeleigenschaften vorliegen. Darüber hinaus kann vorgesehen sein, daß die Steuereinheit einen Taktgeber aufweist, der an die verschiedenen Komponenten der Steuereinheit ein gemeinsames Taktsignal übermittelt.

Im folgenden soll die Erfindung anhand der beiliegenden Zeichnung, die ein erfindungsgemäßes Vorschaltgerät schematisch darstellt, näher erläutert werden.

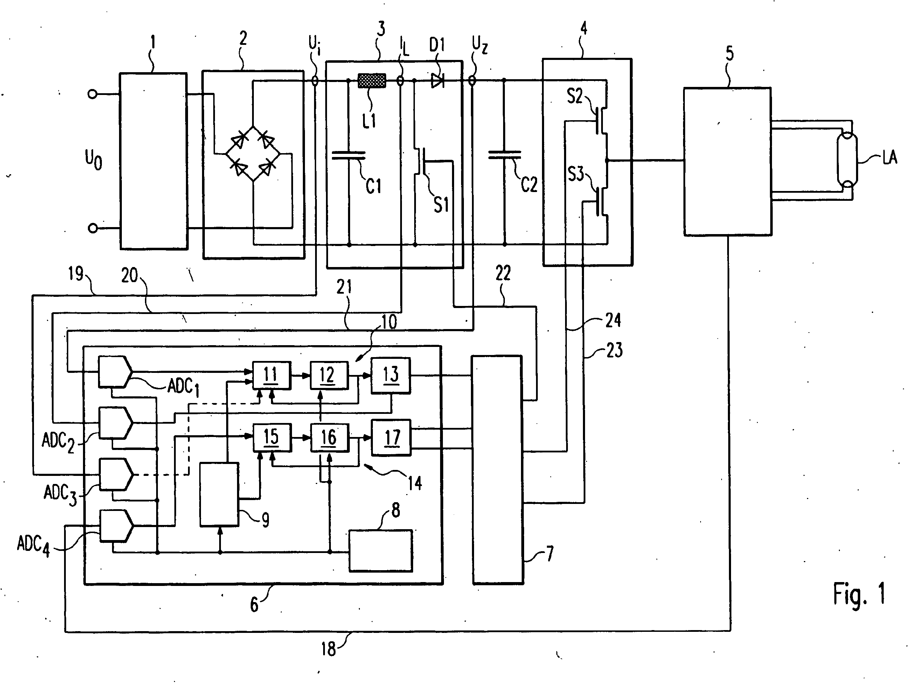

Das in der einzigen Figur 1 dargestellte Vorschaltgerät ist eingangsseitig über ein Hochfrequenzfilter 1 an die Netzversorgungsspannung U₀ angeschlossen. Am Ausgang des Hochfrequenzfilters 1 befindet sich eine Gleichrichterschaltung 2 in Form eines Vollbrückengleichrichters, welche die Netzversorgungsspannung U₀ in eine gleichgerichtete Eingangsspannung Uᵢ für die Glättungsschaltung 3 umsetzt. Diese Glättungsschaltung 3 dient zur Oberwellenfilterung und Glättung der Eingangsspannung Uᵢ und umfaßt einen Glättungskondensator C1 sowie einen eine Induktivität L1, einen steuerbaren Schalter in Form eines MOS-Feldeffekttransistors S1 und eine Diode D1 aufweisenden Hochsetzsteller. Anstelle des Hochsetzstellers können allerdings auch andere Schaltregler verwendet werden.

Durch ein entsprechendes Schalten des MOS-Feldeffekttransistors S 1 wird in bekannter Weise eine über dem sich an die Glättungsschaltung 3 anschließenden Speicherkondensator C2 anliegende Zwischenkreisspannung U_{z} erzeugt, die dem Wechselrichter 4 zugeführt wird. Dieser Wechselrichter 4 wird durch zwei weitere in einer Halbbrückenanordnung angeordnete MOS-Feldeffekttransistoren S2 und S3 gebildet. Durch ein hochfrequentes Ansteuern der beiden Feldeffekttransistoren S2, S3 wird an deren Mittenabgriff eine Wechselspannung erzeugt, die dem Lastkreis 5 mit der daran angeschlossenen Gasentladungslampe LA zugeführt wird. Dies erfolgt in bekannter Weise und soll daher im Folgenden nicht ausführlicher erläutert werden.

Das Ansteuern der drei MOS-Feldeffekttransistoren S1-S3 der Glättungsschaltung 3 und des Wechselrichters 4 erfolgt durch eine Steuerschaltung 6, welche entsprechende Schaltinformationen erzeugt und an eine sich an die Steuerschaltung 6 anschließende Treiberschaltung 7 übermittelt. Die Treiberschaltung 7 setzt die Schaltinformationen in entsprechende Steuersignale um und steuert über die Leitungen 22-24 die Gates der drei MOS-Feldeffekttransistoren S1-S3 an. Dies erfolgt unter Berücksichtigung einer Reihe von Betriebsparametern, die der Steuerschaltung 6 eingangsseitig zugeführt werden. Dabei werden über die Eingangsleitung 18 Betriebsparameter des Lastkreises erfaßt, über die Leitungen 19-21 werden zum Regeln der Zwischenkreisspannung U_{Z} erforderliche Betriebsparameter übermittelt. Die Eingangsleitung 19 dient dabei zum Übertragen eines der gleichgerichteten Versorgungswechselspannung Uᵢ entsprechenden Signals, mit Hilfe der Eingangsleitungen 20 und 21 werden der durch die Induktivität L1 fließende Strom I_{L} - genauer genommen ein diesem Strom I_{L} entsprechender Parameter - und die Zwischenkreisspannung U_{Z} selbst erfaßt.

Innerhalb der Steuerschaltung 6 sind mehrere Analog/Digital-Wandler ADC₁ - ADC₄ sowie zwei digital arbeitende Regelkreise 10 und 14 angeordnet, wobei der erste Regelkreis 10 für das Ansteuern des Schalters S1 der Glättungsschaltung 3 und der zweite Regelkreis 14 für das Ansteuern des Wechselrichters 4 zuständig ist. Die beiden Regelkreise 10 und 14 bestehen jeweils aus einem Rechenblock 11 bzw. 15, einem Speicher-Register 12 bzw. 16 und einem Ausgangsblock 13 bzw. 17 zum Abgeben der Schaltinformation an die Treiberschaltung 7.

Darüber hinaus ist ein Betriebszustands-Steuerblock 9 vorgesehen, der den beiden Rechenblöcken 11 und 15 der Regelkreise 10 und 14 Betriebszustands-Informationen bezüglich der aktuellen Betriebsphase der Gasentladungslampe LA übermittelt. Sämtliche Komponenten der Steuereinheit 6 werden über einen zentralen Taktgeber 8 synchronisiert, der den Komponenten entsprechende Taktsignale übermittelt. Die Steuereinheit 6 ist als anwendungsspezifische integrierte Schaltung (Application Specific Integrated Circuit - ASIC) ausgebildet und nimmt dementsprechend nur wenig Platz ein.

Im folgenden soll die Funktionsweise des ersten Regelkreises 10 zur Regelung der Zwischenkreisspannung U_{Z} erläutert werden. Hierzu werden die drei bereits oben erwähnten Betriebsparameter - die Eingangsspannung Uᵢ, ein dem Induktivitätsstrom I_{L} entsprechender Parameter und die Zwischenkreisspannung U_{Z} von der Steuereinheit 6 erfaßt und mit Hilfe von Analog/Digital-Wandlern ADC₁ - ADC₃ in digitale Werte mit einer Genauigkeit von mindestens 2 bit, vorzugsweise von 12 bit, umgesetzt.

Für diesen ersten Regelkreis 10 ist der von dem ersten Analog/Digital-Wandler ADC₁ erzeugte Digitalwert der Zwischenkreisspannung U_{Z} von vorrangiger Bedeutung, der zunächst dem Rechenblock 11 zugeführt wird. Anhand dieses Wertes berechnet der Rechenblock 11 eine entsprechende Steuerinformation für den MOS-Feldeffekttransistor S1 in Form eines Digitalwertes, der in dem Speicher-Register 12 abgelegt wird. Dieser Wert beinhaltet Informationen über die erforderliche Einschaltdauer oder das Tastverhältnis für den Schalter S1.

Dabei erfolgt die Berechnung - wie durch die Pfeile schematisch angedeutet - unter Berücksichtigung des aktuellen Wertes in dem Speicher-Register 12 und der von dem Betriebszustands-Steuerblock 9 übertragenen Betriebszustands-Information. Die Berücksichtigung dieser Betriebszustands-Information gewährleistet, daß die Regeleigenschaften auf den aktuellen Betriebszustand der Lampe LA abgestimmt werden können, was deswegen von Bedeutung ist, da in unterschiedlichen Betriebsphasen unterschiedliche dynamische Regeleigenschaften gewünscht werden. So ist es während des Zündvorgangs der Lampe wünschenswert, möglichst schnelle Regeleigenschaften zu erzielen, um die in dieser Phase auftretenden großen Leistungsänderungen ausgleichen zu können. Während des Normalbetriebs der Lampe hingegen sollte eine Regeldynamik vorliegen, bei der in erster Linie das Entstehen von Oberwellen unterdrückt wird.

Der in dem Speicher-Register 12 abgelegte Wert wird schließlich von dem Ausgangsblock 13 des Regelkreises 10 in eine entsprechende Schaltinformation umgesetzt und an die Treiberschaltung 7 übermittelt, die ein dementsprechendes Steuersignal zum Betreiben des MOS-Feldeffekttransistors S1 über die Leitung 22 überträgt.

Der Ausgangsblock 13 berücksichtigt dabei den von dem zweiten Analog/Digital-Wandler ADC₂ erzeugten und dem Induktivitätsstrom I_{L} entsprechenden Digitalwert. Hierdurch kann sichergestellt werden, daß ein Schalten des Transistors S1 bei einem Nulldurchgang des Induktivitätsstroms I_{L} erfolgt, wodurch die auftretenden Schaltungsverluste minimiert werden.

Eine Erweiterung der bisher beschriebenen Funktionsweise des ersten Regelkreises 10 erfolgt dadurch, daß bei der Berechnung der Schaltinformationen der Digitalwert der Eingangsspannung Uᵢ ebenfalls von dem Rechenblock 11 berücksichtigt wird, und zwar derart, daß die für den Schalter S1 berechneten Einschaltzeiten verlängert werden, wenn der aktuelle Wert der Eingangsspannung Uᵢ auf niedrige Werte absinkt. Hierdurch wird der bei einem Hochsetzsteller normalerweise auftretende Effekt berücksichtigt, daß der Strom durch die Induktivität L1 kurz vor einem Nulldurchgang der Eingangsspannung Uᵢ sprunghaft auf Null fällt und nach dem Nulldurchgang erst mit einem gewissen Abstand wieder einsetzt. In diesem Zeitraum sind Strom und Spannung nicht in Phase, was zu Oberwellen führt, die als Störungen ins Netz zurückstrahlen können. Durch die Verlängerung der Einschaltzeiten kann dieser Effekt allerdings unterdrückt werden, so daß die Betriebseigenschaften des Vorschaltgeräts nochmals verbessert werden. Dies stellt allerdings lediglich eine Ergänzung der zuvor beschriebenen Regelung dar und ist nicht zwingend erforderlich.

Es ist anzumerken, daß entgegen der schematischen Darstellung in Fig. 1 die Steuerschaltung 6 in Praxis vorzugsweise lediglich einen einzigen Analog/Digital-Wandler aufweist, der im Zeitmultiplex betrieben wird und die über die Eingangsleitungen 19-21 zugeführten Betriebsparameter nacheinander in die benötigten Digitalwerte umsetzt. Auch die Umsetzung der von dem Lastkreis 5 erfaßten Betriebsparameter für die nachfolgend beschriebene Regelung des Wechselrichters 4 erfolgt durch diesen einzigen Analog/Digital-Wandler.

Die Steuerung des Wechselrichters 4 mit Hilfe des zweiten Regelkreises 14 erfolgt in ähnlicher Weise wir die Regelung der Zwischenkreisspannung, wobei dem Rechenblock 15 der von dem vierten Analog/Digital-Wandler ADC₄ bzw. dem im Zeitmultiplex arbeitenden gemeinsam genutzten Analog/Digital-Wandler erzeugte digitale Betriebsparameter zugeführt und in Abhängigkeit davon eine entsprechende Schaltinformation an die Treiberschaltung 7 berechnet und übertragen wird. Auch hier werden mit Hilfe des Betriebszustands-Steuerblocks 9 in verschiedenen Betriebsphasen der Lampe LA unterschiedliche Regeleigenschaften realisiert.

Das dargestellte erfindungsgemäße Konzept eines voll-digital arbeitenden Reglers für die Zwischenkreisspannung und den Wechselrichter bietet somit die Möglichkeit, das Vorschaltgerät kostengünstiger und kompakter herzustellen. Darüber hinaus kann die Regelung deutlich genauer aber auch flexibler durchgeführt werden, so daß neben den oben genannten Vorteilen auch die Leistungsfähigkeit des Vorschaltgeräts erhöht wird.

## Patentansprüche

1. Verfahren zur digitalen Regelung der Zwischenkreisspannung in einem Elektronischen Vorschaltgerät für mindestens eine Gasentladungslampe (LA), mit einer an eine Wechselspannungsquelle (U₀) anschließbaren Gleichrichterschaltung (2), einer an den Ausgang der Gleichrichterschaltung (2) angeschlossenen Glättungsschaltung (3) zum Erzeugen einer Zwischenkreisspannung (Uz) und einem mit der Zwischenkreisspannung (Uz) gespeisten Wechselrichter (4), an dessen Ausgang ein Anschluss für die Lampe (LA) enthaltender Lastkreis (5) angeschlossen ist,
wobei die Glättungsschaltung (3) durch einen Schaltregler gebildet wird und das Vorschaltgerät ferner eine Steuerschaltung (6) aufweist, welche mindestens einen Betriebsparameter (Uᵢ, I_{L}, Uz) der Glättungsschaltung (3) erfasst und einen steuerbaren Schalter (S1) des Schaltreglers in Abhängigkeit von dem Wert des erfassten Betriebsparameters (Uᵢ, I_{L}, Uz) ansteuert, wobei
- ein Analog/Digital-Wandler (ADC₁) den erfassten Betriebsparameters (Uᵢ, I_{L}, Uz) der Glättungsschaltung in einen aus mindestens 2 bit bestehenden Digitalwert umsetzt, und
- die Steuerschaltung (6) auf Basis dieses Digitalwerts in einem digitalen Regelkreis (14) eine Schaltinformation zum Betreiben des steuerbaren Schalters (S1) des Schaltreglers berechnet und an eine Treiberschaltung (7) übermittelt, die diese Schaltinformation in ein entsprechendes Steuersignal zum Ansteuern des Schalters (S1) umsetzt,
wobei die Steuerschaltung (6) ferner mindestens einen Betriebsparameter des Lastkreises (5) erfasst,
wobei die Steuerschaltung (6) einen weiteren Analog/Digital-Wandler (ADC₄) zum Umsetzen dieses Betriebsparameters des Lastkreises in einen aus mindestens 2 bit bestehenden Digitalwert aufweist, auf Basis dieses Digitalwerts in einem weiteren digitalen Regelkreis (10) eine Schaltinformation zum Betreiben des Wechselrichters (4) berechnet und an die Treiberschaltung (7) übermittelt, welche diese Schaltinformation in ein entsprechendes Steuersignal zum Ansteuern des Wechselrichters (4) umsetzt, und die Steuerschaltung (6) in einer Schaltung digital integriert ist.

2. Verfahren nach Anspruch 1,
wobei die Regelung der Zwischenkreisspannung zur Stabilisierung der Zwischenkreisspannung oder zur Verringerung der Rückstrahlung von Oberwellen erfolgt.

3. Elektronisches Vorschaltgerät für mindestens eine Gasentladungslampe (LA), mit einer an eine Wechselspannungsquelle (U₀) anschließbaren Gleichrichterschaltung (2), einer an den Ausgang der Gleichrichterschaltung (2) angeschlossenen Glättungsschaltung (3) zum Erzeugen einer Zwischenkreisspannung (Uz) und einem mit der Zwischenkreisspannung (Uz) gespeisten Wechselrichter (4), an dessen Ausgang ein Anschlüsse für die Lampe (LA) enthaltender Lastkreis (5) angeschlossen ist,
wobei die Glättungsschaltung (3) durch einen Schaltregler gebildet wird und das Vorschaltgerät ferner eine Steuerschaltung (6) aufweist, welche zur Zwischenkreisregelung mindestens einen Betriebsparameter (Uᵢ, I_{L}, Uz) der Glättungsschaltung (3) erfasst und einen steuerbaren Schalter (S1) des Schaltreglers in Abhängigkeit von dem Wert des erfassten Betriebsparameters (Uᵢ, I_{L}, Uz) ansteuert,
**dadurch gekennzeichnet**
**dass** die Steuerschaltung (6) einen Analog/Digital-Wandler (ADC1) zum Umsetzen des erfassten Betriebsparameters (Uᵢ, I_{L}, Uz) in einen aus mindestens 2 bit bestehenden Digitalwert aufweist,
wobei die Steuerschaltung (6) auf Basis dieses Digitalwerts in einem digitalen Regelkreis (14) eine Schaltinformation zum Betreiben des steuerbaren Schalters (S1) des Schaltreglers berechnet und an eine Treiberschaltung (7) übermittelt, die diese Schaltinformation in ein entsprechendes Steuersignal zum Ansteuern des Schalters (S1) umsetzt,
wobei die Steuerschaltung (6) ferner mindestens einer Betriebsparameter des Lastkreises (5) erfasst,
wobei die Steuerschaltung (6) einen weiteren Analog/Digital-Wandler (ADC₄) zum Umsetzen dieses Betriebsparameters des Lastkreises in einen aus mindestens 2 bit bestehenden Digitalwert aufweist, auf Basis dieses Digitalwerts in einem weiteren digitalen Regelkreis (10) eine Schaltinformation zum Betreiben des Wechselrichters (4) berechnet und an die Treiberschaltung (7) übermittelt, welche diese Schaltinformation in ein entsprechendes Steuersignal zum Ansteuern des Wechselrichters (4) umsetzt, und die Steuerschaltung (6) in einer Schaltung digital integriert ist.

4. Elektronisches Vorschaltgerät nach Anspruch 3,
**dadurch gekennzeichnet,**
**daß** die Steuerschaltung (6) die Zwischenkreisspannung (U_{Z}) erfaßt.

5. Elektronisches Vorschaltgerät nach Anspruch 3 oder 4,
**dadurch gekennzeichnet,**
**daß** die Steuerschaltung (6) die Eingangsspannung (Uᵢ) der Glättungsschaltung (3) erfaßt.

6. Elektronisches Vorschaltgerät nach Anspruch 5,
**dadurch gekennzeichnet,**
**daß** die Steuerschaltung (6) die Einschaltzeit des steuerbaren Schalters (S1) des Schaltreglers verlängert, wenn sich die Eingangsspannung (Uᵢ) ihrem Minimalwert annähert.

7. Elektronisches Vorschaltgerät nach einem der Ansprüche 3 bis 6,
**dadurch gekennzeichnet,**
**daß** die Glättungsschaltung (3) durch einen Hochsetzsteller gebildet wird.

8. Elektronisches Vorschaltgerät nach Anspruch 7,
**dadurch gekennzeichnet,**
**daß** die Steuerschaltung (6) den durch eine Induktivität (L) des Hochsetzstellers fließenden Strom (I_{L}) bzw. einen diesem Strom (I_{L}) entsprechenden Parameter erfaßt.

9. Elektronisches Vorschaltgerät nach Anspruch 3,
**dadurch gekennzeichnet,**
**daß** die Steuerschaltung (6) die Lampenspannung erfaßt.

10. Elektronisches Vorschaltgerät nach Anspruch 3 oder 9,
**dadurch gekennzeichnet,**
**daß** die Steuerschaltung (6) den Lampenstrom erfaßt.

11. Elektronisches Vorschaltgerät nach einem der Ansprüche 3 bis 10,
**dadurch gekennzeichnet,**
**daß** die Steuerschaltung (6) zum Umsetzen aller erfaßten Betriebsparameter einen einzigen im Zeitmultiplex arbeitenden Analog/Digital-Wandler aufweist.

12. Elektronisches Vorschaltgerät nach einem der Ansprüche 3 bis 11,
**dadurch gekennzeichnet,**
**daß** der bzw. die Analog/Digital-Wandler (ADC₁₋₄) den bzw. die erfaßten Betriebsparameter(Uᵢ, I_{L}, U_{Z}) in Digitalwerte mit einer Genauigkeit von 12 bit umsetzen.

13. Elektronisches Vorschaltgerät nach einem der Ansprüche 3 bis 12,
**dadurch gekennzeichnet,**
**daß** die Steuerschaltung (6) einen Betriebszustands-Steuerblock (9) aufweist, wobei die Berechnung der Schaltinformation(en) zum Betrieben des Schaltreglers und/oder des Wechselrichters (4) in Abhängigkeit einer von dem Betriebszustands-Steuerblock (9) abgegebenen Betriebszustands-Information erfolgt.

14. Elektronisches Vorschaltgerät nach einem der Ansprüche 3 bis 13,
**dadurch gekennzeichnet,**
**daß** die Steuerschaltung (6) einen Taktgeber (8) zum Übermitteln eines Taktsignales an die Komponenten (ADC₁₋₄, 9-13) der Steuerschaltung (6) aufweist.

## Claims

1. Method for digital regulation of the intermediate circuit voltage in an electronic ballast for at least one gas discharge lamp (LA),
having a rectifier circuit (2) connectable to an a.c. voltage source (U₀), a smoothing circuit (3), connected to the output of the rectifier circuit (2), for generating an intermediate circuit voltage (U_{z}), and an inverter (4) fed with the intermediate circuit voltage (U_{z}), at the output of which inverter a connection for the load circuit (5) containing the lamp (LA) is connected,
the smoothing circuit (3) being constituted by a switching regulator and the ballast further having a control circuit (6) which detects at least one operating parameter (Uᵢ, I_{L}, U_{z}) of the smoothing circuit (3) and controls a controllable switch (S1) of the switching regulator in dependence upon the value of the detected operating parameter (Uᵢ, I_{L}, U_{z}),
wherein
- an analog-digital converter (ADC₁) converts the detected operating parameter (Uᵢ, I_{L}, U_{z}) of the smoothing circuit into a digital value consisting of at least two bits,
- the control circuit (6) calculates, on the basis of this digital value, in a digital regulation circuit (14), switching information for operation of the controllable switch (S1) of the switching regulator and passes the switching information to a driver circuit (7) which converts this switching information into a corresponding control signal for controlling the switch (S1),
wherein the control circuit (6) further detects at least one operating parameter of the load circuit (5),
wherein the control circuit includes a further analog-digital converter (ADC₄) for converting this operating parameter of the load circuit into a digital value consisting of at least two bits, and calculates, on the basis of this digital value, in a further digital regulation circuit (10), switching information for operation of the inverter (4) and passes this on to the driver circuit (7), which driver circuit converts this switching information into a corresponding control signal for controlling the inverter (4), and the control circuit (6) is digitally integrated in a circuit.

2. Method according to claim 1,
wherein the regulation of the intermediate circuit voltage is effected for stabilising the intermediate circuit voltage or for reducing the return of harmonics.

3. Electronic ballast for at least one gas discharge lamp (LA), having a rectifier circuit (2) connectable to an a.c. voltage source (U₀), a smoothing circuit (3), connected to the output of the rectifier circuit (2), for generating an intermediate circuit voltage (U_{z}), and an inverter (4) fed with the intermediate circuit voltage (U_{z}), at the output of which inverter a connection for the load circuit (5) containing the lamp (LA) is connected,
the smoothing circuit (3) being constituted by a switching regulator and the ballast further having a control circuit (6) which, for intermediate circuit voltage regulation, detects at least one operating parameter (Uᵢ, I_{L}, U_{z}) of the smoothing circuit (3) and controls a controllable switch (S1) of the switching regulator in dependence upon the value of the detected operating parameter (Uᵢ, I_{L}, U_{z}),
**characterised in that**,
the control circuit (6) has an analog-digital converter (ADC1) for converting the detected operating parameter (Uᵢ, I_{L}, U_{z}) into a digital value consisting of at least two bits,
the control circuit (6) calculating, on the basis of this digital value, in a digital regulation circuit (14), switching information for operation of the controllable switch (S1) of the switching regulator and passes the switching information to a driver circuit (7) which converts this switching information into a corresponding control signal for controlling the switch (S1),
the control circuit (6) further detecting at least one operating parameter of the load circuit (5),
the control circuit including a further analog-digital converter (ADC₄) for converting this operating parameter of the load circuit into a digital value consisting of at least two bits, and calculating, on the basis of this digital value, in a further digital regulation regulation circuit (10), switching information for operation of the inverter (4) and passing this on to the driver circuit (7), which driver circuit converts this switching information into a corresponding control signal for controlling the inverter (4), and the control circuit (6) is digitally integrated in a circuit.

4. Electronic ballast according to claim 3,
**characterized in that**,
the control circuit (6) detects the intermediate circuit voltage (U_{z}).

5. Electronic ballast according to claim 3 or 4,
**characterized in that**,
the control circuit (6) detects the input voltage (Uᵢ) of the smoothing circuit (3).

6. Electronic ballast according to claim 5,
**characterized in that**,
the control circuit (6) extends the on-state time of the controllable switch (S1) of the switching regulator when the input voltage (Uᵢ) approaches its minimal value.

7. Electronic ballast according to any of claims 3 to 6,
**characterised in that**,
the smoothing circuit (3) is formed by means of a step-up converter.

8. Electronic ballast according to claim 7,
**characterised in that**,
the control circuit (6) detects the current (I_{L}) flowing through an inductance of the step-up converter, or a parameter corresponding to this current (I_{L}).

9. Electronic ballast according to claim 3,
**characterised in that**,
the control circuit (6) detects the lamp voltage.

10. Electronic ballast according to claim 3 or 9,
**characterised in that**,
the control circuit (6) detects the lamp current.

11. Electronic ballast according to claim 10,
**characterised in that**,
the control circuit (6) has a single analog/digital converter, operating in time multiplex, for conversion of all detected operating parameters.

12. Electronic ballast according to any of claims 3 to 11,
**characterised in that**,
the analog/digital converter or converters (ADC₁₋₄), convert the detected operating parameter or parameters (Uᵢ, I_{L}, U_{z}) into digital values with a precision of 12 bits.

13. Electronic ballast according to any of claims 3 to 12,
**characterised in that**,
the control circuit (6) has an operating state control block (9), wherein the calculation of the switching information for operation of the switching regulator and/or of the inverter (4) is effected in dependence upon operating condition information provided by the operating condition control block (9).

14. Electronic ballast according to any of claims 3 to 13,
**characterised in that**,
the control circuit (6) has a clock (8) for passing a clock signal to the components (ADC₁₋₄, 9-13) of the control circuit.

## Revendications

1. Procédé pour le réglage numérique de la tension de circuit intermédiaire dans un ballast électronique pour au moins une lampe à décharge gazeuse (LA), avec un circuit redresseur (2) pouvant se brancher sur une source de tension alternative (Uₒ), un circuit de lissage (3) branché sur la sortie du circuit redresseur (2), pour créer une tension de circuit intermédiaire (Uz) et un onduleur (4) alimenté avec la tension de circuit intermédiaire (Uz), à la sortie duquel est branché un raccord pour le circuit de charge (5) contenant la lampe (LA),
le circuit de lissage (3) étant formé par un régulateur à découpage et le ballast comportant par ailleurs un circuit de commande (6) qui détecte au moins un paramètre de fonctionnement (Uᵢ, I_{L}, Uz) du circuit de lissage (3) et qui commande un interrupteur pilotable (S1) du régulateur à découpage, en fonction de la valeur du paramètre de fonctionnement (Uᵢ, I_{L}, Uz) détecté,
un convertisseur analogique/numérique (ADC_{L}) transformant le paramètre de fonctionnement détecté (Uᵢ, Uz) du circuit de lissage en une valeur numérique composée d'au moins 2 bits, et
sur la base de cette valeur numérique, ce circuit de commande (6) calculant dans un circuit de réglage numérique (14) une information de commutation pour faire fonctionner l'interrupteur commandable (S 1) du régulateur à découpage et la transmettant à un circuit d'excitation (7) qui transforme cette information de commutation en un signal de commande correspondant pour commander l'interrupteur (S 1),
le circuit de commande (6) détectant par ailleurs au moins un paramètre de fonctionnement du circuit de charge (5),
le circuit de commande (6) comportant un autre convertisseur analogique/numérique (ADC₄) pour transformer ce paramètre de fonctionnement du circuit de charge en une valeur numérique composée au moins de 2 bits, calculant sur la base de cette valeur numérique dans un autre circuit de réglage numérique (10) une information de commutation pour faire fonctionner l'onduleur (4) et la transmettant au circuit excitateur (7) qui transforme cette information de commutation en un signal de commande correspondant pour exciter l'onduleur (4) et le circuit de commande (6) étant numériquement intégré dans un circuit.

2. Procédé selon la revendication 1,
le réglage de la tension du circuit intermédiaire étant effectué pour la stabilisation de la tension du circuit intermédiaire ou pour la diminution de la réflexion d'ondes harmoniques..

3. Ballast électronique pour au moins une lampe à décharge gazeuse (LA), avec un circuit de redresseur (2) pouvant se brancher sur une source de tension alternative (U₀), un circuit de lissage (3) branché sur la sortie du circuit de redresseur (2), pour créer une tension de circuit intermédiaire (Uz) et un onduleur (4) alimenté avec la tension de circuit intermédiaire (Uz), à la sortie duquel est branché un raccord pour le circuit de charge (5) contenant la lampe (LA),
le circuit de lissage (3) étant formé par un régulateur à découpage et le ballast comportant par ailleurs un circuit de commande (6) qui pour le réglage du circuit intermédiaire détecte au moins un paramètre de fonctionnement (Uᵢ, I_{L}, Uz) du circuit de lissage (3) et qui excite un interrupteur commandable (S1) du régulateur à découpage, en fonction de la valeur du paramètre de fonctionnement (Uᵢ, IL, Uz) détecté,
**caractérisé en ce que**
le circuit de commande (6) comporte un convertisseur analogique/numérique (ADC1) pour transformer le paramètre de fonctionnement détecté (Uᵢ, I_{L}, Uz) en une valeur numérique composée au moins de 2 bits,
sur la base de cette valeur numérique, le circuit de commande (6) calculant dans un circuit de réglage numérique (14) une information de commutation pour faire fonctionner l'interrupteur commandable (S1) du régulateur à découpage et la transmettant à un circuit d'excitation (7) qui transforme cette information de commutation en un signal de commande correspondant pour commander l'interrupteur (S1),
le circuit de commande (6) détectant par ailleurs au moins un paramètre de fonctionnement du circuit de charge (5),
le circuit de commande (6) comportant un autre convertisseur analogique/numérique (ADC₄) pour transformer ce paramètre de fonctionnement du circuit de charge en une valeur numérique composée au moins de 2 bits, calculant sur la base de cette valeur numérique dans un autre circuit de réglage numérique (10) une information de commutation pour faire fonctionner l'onduleur (4) et la transmettant au circuit excitateur (7) qui transforme cette information de commutation en un signal de commande correspondant pour commander l'onduleur (4) et le circuit de commande (6) étant numériquement intégré dans un circuit.

4. Ballast électronique selon la revendication 3,
**caractérisé en ce que**
le circuit de commande (6) détecte la tension du circuit intermédiaire (U_{z}).

5. Ballast électronique selon la revendication 3 ou 4,
**caractérisé en ce que**
le circuit de commande (6) détecte la tension d'entrée (Uᵢ) du circuit de lissage (3).

6. Ballast électronique selon la revendication 5,
**caractérisé en ce que**
le circuit de commande (6) rallonge le temps de mise en route de l'interrupteur commandable (S1) du régulateur à découpage, si la tension d'entrée (Uᵢ) se rapproche de sa valeur minimale.

7. Ballast électronique selon l'une quelconque des revendications 3 à 6,
**caractérisé en ce que**
le circuit de lissage (3) est formé par un convertisseur élévateur.

8. Ballast électronique selon la revendication 7,
**caractérisé en ce que**
le circuit de commande (6) détecte le courant (I_{L}) circulant à travers une résistance inductive (L) du convertisseur élévateur ou un paramètre correspondant à ce courant (I_{L}).

9. Ballast électronique selon la revendication 3,
**caractérisé en ce que**
le circuit de commande (6) détecte la tension de la lampe

10. Ballast électronique selon la revendication 3 ou 9,
**caractérisé en ce que**
le circuit de commande (6) détecte le courant de la lampe

11. Ballast électronique selon l'une quelconque des revendications 3 à 10,
**caractérisé en ce que**
pour transformer tous les paramètres détectés, le circuit de commande (6) comporte un seul convertisseur analogique/numérique fonctionnant par multiplexage temporel.

12. Ballast électronique selon l'une quelconque des revendications 3 à 11,
**caractérisé en ce que**
le ou les convertisseurs analogique/numérique (ADC_{1 à 4}), transforme(nt) le ou les paramètre(s) de fonctionnement détectés (Uᵢ, I_{L}, UZ) en valeurs numériques, avec une précision de 12 bits.

13. Ballast électronique selon l'une quelconque des revendications 3 à 12,
**caractérisé en ce que**
le circuit de commande (6) comporte un bloc de commande de l'état de fonctionnement (9), le calcul de (des) information(s) de commutation pour faire fonctionner le régulateur à découpage et/ou l'onduleur (4) étant effectué en fonction de l'information concernant l'état de fonctionnement qui est délivrée par le bloc de commande de l'état de fonctionnement (9).

14. Ballast électronique selon l'une quelconque des revendications 3 à 13,
**caractérisé en ce que**
le circuit de commande (6) comporte un générateur de rythme (8) pour transmettre un signal de synchronisation (ADC_{1 à 4}, 9 à 13) aux composants du circuit de commande.
